# EUROPÄISCHE PATENTANMELDUNG

(11) **EP 4 491 540 A1**
(43) Veröffentlichungstag der Anmeldung: **15.01.2025**
(21) Anmeldenummer: 23184469.7
(22) Anmeldetag: 10.07.2023
(51) Int. Cl.: B65G 1/137, B25J 9/16, G06Q 10/08

(54) **SYSTEM UND VERFAHREN FÜR DIE ARTIKELKOMMISSIONIERUNG IN EINEM FACHBODENLAGER**

(71) Anmelder: Dynamics Plus International GmbH, 63868 Grosswallstadt (DE)
(72) Erfinder: Buchmann, Tobias, 63868 Grosswallstadt (DE)
(74) Vertreter: Betten & Resch

(57) **Zusammenfassung**

Es wird ein Kommissioniersystem zum Kommissionieren von Artikeln bereitgestellt, wobei das System Folgendes umfasst: ein Lager, das eine Vielzahl von Regalen mit in mehreren Ebenen angeordneten Lagerplätzen zur Lagerung und Bereitstellung von Artikeln aufweist und mindestens einen Kommissionierplatz zum Kommissionieren von aus dem Lager entnommenen Artikeln. Ferner umfasst das System eine Lagerverwaltungseinheit, die basierend auf Kommissionieraufträgen eine definierte Kommissioniersequenz generiert, mindestens ein Sammelfahrzeug und mindestens einen Avatarroboter, die zur Erfüllung der Kommissionieraufträge unabhängig voneinander innerhalb des Lagers zu den in der Kommissioniersequenz zur Durchführung eines Kommissionierauftrags bestimmten Artikel-Entnahmepositionen navigierbar sind. Das Sammelfahrzeug weist Lagerflächen zur Aufnahme von zu kommissionierenden Artikeln auf, und der Avatarroboter weist ein oder mehrere Greifmittel auf zum Ergreifen von den zu kommissionierenden Artikeln von den Lagerplätzen und zum Ablegen der zu kommissionierenden Artikel auf den Lagerflächen des jeweils zugeordneten Sammelfahrzeugs, wobei die ein oder mehreren Greifmittel durch einen Telemitarbeiter fernsteuerbar sind.

## Beschreibung

### TECHNISCHES GEBIET

Die vorliegende Erfindung bezieht sich auf ein System für die Kommissionierung von Waren oder Artikeln innerhalb eines Lagers sowie auf ein Verfahren zur Durchführung der Artikelkommissionierung mittels dieses Systems.

### HINTERGRUND

In modernen Lagerprozessen werden häufig manuell bediente Fachbodenanlagen genutzt, welche in diversen Größen und Strukturen, einschließlich mehrgeschossigen Konfigurationen, verfügbar sind. In diesen mehrgeschossigen Anlagen, die durch Warenaufzüge, Fördertechnik und Treppen miteinander verbunden sind, wird von sogenannten "pick towers" gesprochen. Hierbei erstrecken sich die Fachbodenreihen bis zu einer Zugriffshöhe von 2 Metern, um Mitarbeitern einen Zugriff ohne Steighilfe zu ermöglichen.

In diesen manuell bedienten Anlagen oder "pick towers" werden Bestellungen durch Mitarbeiter zusammengestellt, die eine bestimmte Anzahl an Artikeln aus einem bestimmten Fach entnehmen, bevor sie ihren Weg zum nächsten Entnahmeort fortsetzen. Diese "Wegzeiten", also die Bewegungszeit von einem Entnahmeort zum nächsten, gelten grundsätzlich als unproduktiv. Daher sind viele organisatorische und technische Optimierungsansätze darauf ausgerichtet, diese Wegzeiten zu reduzieren, wie beispielsweise durch 2-stufige Kommissionierung und Batch-Bildung.

Nach heutigem Stand ist es durchaus möglich, diese Wegzeit mittels eines automatisierten Gerätes zu überwinden, auch im gemischten Betrieb mit menschlichen Kommissionierern. Allerdings ist der Kommissionierprozess selbst, welcher in Orientierung, Vereinzelung, Entnahme und Ablegen von Artikeln unterteilt ist, nur begrenzt automatisierbar.

Es existieren Kombinationen von Bilderkennungssystemen und Greiftechniken, die für geometrisch regelmäßige Produkte recht gute Ergebnisse erzielen. Diese Techniken sind jedoch je nach Branche auf etwa 60-80% aller zu kommissionierenden Produkte beschränkt. Bezogen auf Geschwindigkeit, Zuverlässigkeit und Verwendbarkeit über ein breites Spektrum an Produkten mit vielfältigen Verpackungen, sind sie dennoch der Hand-Auge-Koordination eines menschlichen Kommissionierers unterlegen.

Aus diesem Grund besteht nach wie vor ein Bedarf an verbesserten Systemen und Methoden zur Artikelkommissionierung. Diese sollten unproduktive Wegzeiten der Mitarbeiter eliminieren und gleichzeitig die Handhabung einer breiten Palette von Produkten im Auswahlprozess ermöglichen. Die Lagerbetreiber sollen von den Vorteilen der Automatisierung profitieren, während sie gleichzeitig die Flexibilität und Vielfalt eines manuellen Kommissioniersystems beibehalten.

Es ist somit eine Aufgabe der vorliegenden Erfindung den Kommissioniervorgang innerhalb eines Lagers effizienter zu gestalten, dabei jedoch die Flexibilität und Vielfalt eines manuellen Kommissioniersystems beizubehalten.

Erfindungsgemäß wird das Problem durch ein System gemäß eines Kommissioniersystems nach Anspruch 1 und ein Verfahren zur Kommissionierung nach Anspruch 12 gelöst.

### ÜBERSICHT

Im Folgenden werden verschiedene Aspekte der vorliegenden Offenbarung zusammengefasst, um ein grundlegendes Verständnis für diese Aspekte und die damit verbundenen Vorteile zu vermitteln. Weitere Aspekte und technische Details werden im nachfolgenden Kapitel "Detaillierte Beschreibung" behandelt.

Ein Kommissioniersystem gemäß der vorliegenden Erfindung umfasst ein Lager, das eine Vielzahl von Regalen mit in mehreren Ebenen angeordneten Lagerplätzen zur Lagerung und Bereitstellung von Artikeln aufweist sowie mindestens einen Kommissionierplatz zum Kommissionieren von aus dem Lager entnommenen Artikeln. Ferner umfasst das System eine Lagerverwaltungseinheit, die basierend auf Kommissionieraufträgen eine definierte Kommissioniersequenz generiert; mindestens ein Sammelfahrzeug und mindestens einen Avatarroboter, die zur Erfüllung der Kommissionieraufträge unabhängig voneinander innerhalb des Lagers zu den in der Kommissioniersequenz zur Durchführung eines Kommissionierauftrags bestimmten Artikel-Entnahmepositionen navigierbar sind, wobei das Sammelfahrzeug Lagerflächen zur Aufnahme von zu kommissionierenden Artikeln aufweist, und der Avatarroboter ein oder mehrere Greifmittel zum Ergreifen von den zu kommissionierenden Artikeln von den Lagerplätzen und zum Ablegen der zu kommissionierenden Artikel auf den Lagerflächen des jeweils zugeordneten Sammelfahrzeugs aufweist, wobei die ein oder mehreren Greifmittel durch einen TeleMitarbeiter fernsteuerbar sind.

Ein derartiges Kommissioniersystem hat den Vorteil, dass es die Effizienz und Genauigkeit des Kommissionierprozesses deutlich verbessert. Es erlaubt eine weitgehende Automatisierung des Kommissionierprozesses, ohne die Flexibilität und Genauigkeit des manuellen Kommissionierens zu opfern. Die Kombination aus automatisierter Navigation und menschlicher Steuerung des Kommissioniervorgangs ermöglicht es, eine Vielzahl von Artikeln schnell, präzise und sicher zu handhaben. Diese Kombination erweitert das Produktspektrum, das automatisch kommissioniert werden kann und beseitigt viele der Beschränkungen, die vollständig automatisierte Systeme hinsichtlich der Geometrie, Verpackung und Flexibilität der zu kommissionierenden Artikel haben.

Darüber hinaus minimiert das erfindungsgemäße System unproduktive "Wegzeiten" - die Zeiten, in denen Kommissionierer von einem Entnahmeort zum nächsten gehen müssen. Dies wird dadurch erreicht, dass sowohl das Sammelfahrzeug als auch der Avatarroboter selbstständig zu den entsprechenden Entnahmeorten navigieren. Währenddessen kann sich der Telemitarbeiter auf einen anderen bereitstehenden Avatarroboteraufschalten, sobald die Kommissionierung an einem Ort abgeschlossen ist. Dies ermöglicht eine kontinuierliche Kommissionierung, ohne Zeit für den Transport zwischen den Kommissionierorten zu verlieren.

Schlussendlich profitiert das erfindungsgemäße System von einer Skalierbarkeit, die sowohl für kleine als auch für große Lageranlagen geeignet ist. Mit der zunehmenden Anzahl von Sammelfahrzeugen und Avatarroboternkann das System leicht auf gestiegene Anforderungen und größere Lagerkapazitäten reagieren. Durch die Unabhängigkeit von Sammelfahrzeug und Avatarroboter wird die Gesamtproduktivität des Systems nicht durch einzelne Ausfälle oder Verzögerungen beeinträchtigt, da andere Sammelfahrzeuge und Avatarroboter ihre Aufgaben weiterhin unabhängig erfüllen können.

Vorzugsweise weist das Kommissioniersystem mehrere Avatarroboter auf deren Greifmittel von dem Telemitarbeiter intermittierend fersteuerbar sind.

Dieser Aspekt des Kommissioniersystems hat den Vorteil, dass durch den Einsatz mehrerer Avatarroboter der Kommissioniervorgang auf mehrere Greif-und Platzierungsoperationen gleichzeitig aufgeteilt werden kann. Dies erhöht die Gesamteffizienz des Systems, da während der Bearbeitung eines Auftrags durch einen Avatarroboter ein anderer Avatarroboter bereits zum nächsten Kommissionierpunkt navigieren oder einen anderen Auftrag bearbeiten kann.

Vorzugsweise weisen die Avatarroboter des Kommissioniersystems fernsteuerbare Kamerasysteme zur Unterstützung der ferngesteuerten Betätigung der ein oder mehreren Greifmittel auf.

Vorzugsweise ist der Kommissionierplatz des Kommissioniersystems konfiguriert, die von den Sammelfahrzeugen zugeförderten Artikel nach Kommissionieraufträgen zu sortieren und für den Weitertransport bereitzustellen.

Vorzugsweise ist das mindestens eine Sammelfahrzeug und der mindestens eine Avatarroboter des Kommissioniersystems über eine drahtlose Kommunikationsverbindung mit der Lagerverwaltungseinheit verbunden sind, um Kommissionieranweisungen zu erhalten und um einen aktuellen Zustand des Kommissionierungsvorgangs an die Lagerverwaltungseinheit zu übermitteln.

Vorzugsweise ist das Lager des Kommissioniersystems ein Fachbodenlager.

Vorzugsweise weisen das mindestens eine Sammelfahrzeug und der mindestens eine Avatarroboter des Kommissioniersystems Sensoren auf und/oder navigieren mithilfe von Markierungen auf der Fahrbahn innerhalb des Lagers.

Vorzugsweise weisen die ein oder mehreren Greifmittel des mindestens einen Avatarroboters des Kommissioniersystems Drucksensoren auf. Dadurch können feinere Abstufungen von Kraft gemessen und angewendet werden, was die Präzision beim Aufnehmen von Gegenständen verbessert.

Vorzugsweise ermöglicht der mindestens eine Avatarroboter eine Echtzeit-Rückmeldung über den Greifdruck an den Telemitarbeiter. Der Telemitarbeiter erhält unmittelbare Rückmeldungen über den Greifdruck, was eine effektivere und präzisere Steuerung des Avatarroboters ermöglicht. Ein sofortiges Feedback über den Greifdruck kann dazu beitragen, Schäden an den kommissionierten Gegenständen zu minimieren, indem der Telemitarbeiter den Greifdruck rechtzeitig anpasst, falls dieser zu stark oder zu schwach ist.

Vorzugsweise weisen die ein oder mehreren Greifmittel des mindestens einen Avatarroboters eine automatische Greifkraftregelung auf, die auf den Daten der Drucksensoren basiert. Die Greifkraftregelung ermöglicht es dem Avatarroboter, seine Greifkraft automatisch an die Eigenschaften des jeweiligen Gegenstandes anzupassen. Dies erhöht die Effizienz und Genauigkeit des Kommissionierprozesses. Die automatische Greifkraftregelung kann dazu beitragen, Schäden an den kommissionierten Gegenständen zu verhindern, indem sie eine zu starke oder zu schwache Greifkraft vermeidet.

Vorzugsweise ist jedes Greifmittel des mindestens einen Avatarroboters ein Greifarm und weist einen bestimmten Greifertyp auf. Verschiedene Greifertypen ermöglichen es dem Avatarroboter, eine Vielzahl von Gegenständen mit unterschiedlichen Formen, Größen und Gewichten zu handhaben. Dies erhöht die Flexibilität und Vielseitigkeit des Kommissioniersystems.

Vorzugsweise ist der Avatarroboter ein Fahrzeug.

Ein erfindungsgemäßes Verfahren zum Kommissionieren von Artikeln in einem Kommissioniersystem, umfasst folgende Schritte: das Bereitstellen eines Lagers mit einer Vielzahl von Regalen und in mehreren Ebenen angeordneten Lagerplätzen zur Lagerung und Bereitstellung von Artikeln sowie mindestens eines Sammelfahrzeugs mit Lagerflächen zur Aufnahme von Artikeln und mindestens eines Avatarroboters mit ein oder mehreren Greifmitteln zum Ergreifen von zu kommissionierenden Artikeln und zum Ablegen der ergriffenen Artikel auf den Lagerflächen eines Sammelfahrzeugs. Ferner umfasst das Verfahren das Bereitstellen von mindestens einem Kommissionierplatz zum Kommissionieren von aus dem Lager entnommenen Artikeln und das Generieren einer definierten Kommissioniersequenz durch eine Lagerverwaltungseinheit basierend auf empfangenen Kommissionieraufträgen. Ein weiterer Schritt des Verfahrens umfasst das Navigieren des mindestens einen Sammelfahrzeugs und Avatarroboters innerhalb des Lagers zu den in der Kommissioniersequenz zur Durchführung eines Kommissionierauftrags bestimmten Artikel-Entnahmepositionen, sowie das Erteilen einer Freigabe durch den Avatarroboter an einen Telemitarbeiter zur Fernsteuerung der ein oder mehreren Greifmittel des Avatarroboters, das Ergreifen von zu kommissionierenden Artikeln von den Lagerplätzen durch die ein oder mehreren Greifmittel des Avatarroboters und das Ablegen der ergriffenen Artikel auf den Lagerflächen des jeweils zugeordneten Sammelfahrzeugs.

### LISTE DER FIGUREN

Die vorliegende Erfindung wird nachfolgend im Detail unter Bezugnahme auf die beigefügten Zeichnungen beschrieben:
**Fig. 1** zeigt beispielhaft eine dreidimensionale Anordnung eines Kommissioniersystems.
**Fig. 2** zeigt ein Beispiel eines Avatarroboters, welches Teil des Kommissioniersystems ist.
**Fig. 3** zeigt ein Beispiel eines Sammelfahrzeugs, welches Teil des Kommissioniersystems ist.
**Fig. 4** zeigt ein Blockdiagramm, das den Prozess des Kommissionierens von Artikeln in einem Kommissioniersystem skizziert.
**Fig. 5** liefert eine schematische Darstellung des Weges, der von Avatarrobotern und Sammelfahrzeugen während eines Kommissionierprozesses eingeschlagen wird.

### DETAILLIERTE BESCHREIBUNG

Die vorliegende Offenbarung befasst sich mit der Kommissionierung von Artikeln, Waren bzw. Gegenständen in einem Lager. Kommissionierung ist der Prozess, bei dem einzelne Artikel aus einer Lagerhaltung entnommen und für den Versand an den Kunden oder für die Produktion zusammengestellt werden. Das im folgenden beschriebene System beinhaltet den Einsatz von zwei unterschiedlichen, autonomen Gerätearten in einem Regalsystem: einem Sammelfahrzeug und einem Avatarroboter.

Das Sammelfahrzeug trägt eine bestimmte Anzahl von Lagerflächen beispielsweise Auftragsbehältern und bewegt sich autonom und selbständig zum nächsten Ziel. Der Avatarroboter ist mit Kameras und ein oder mehreren Greifmittel ausgestattet und führt den eigentlichen Kommissioniervorgang aus. Dieser Vorgang wird nicht automatisiert, sondern von einem Telemitarbeiter gesteuert, um eine vollständige Produktabdeckung zu ermöglichen. Der Greifprozess kann aber auch teilautomatisiert werden.

Nachdem der Telemitarbeiter mit Hilfe der Greifmittel einen Artikel aufgenommen hat, legt er ihn optisch oder akustisch geführt auf eine bestimmte Lagerfläche ab, der sich auf dem Sammelfahrzeug befindet. Dann wechselt der Telemitarbeiter zum nächsten ihm zugeteilten Avatarroboter.

Der Kommissioniervorgang ist teilautomatisiert, ferngesteuert durch einen Menschen, was eine Kommissionierung von 100% eines jeden Produktspektrums ermöglicht. Gleichzeitig werden sämtliche Wegezeiten für den Kommissionierer eliminiert, da sich beide Gerätetypen selbständig bewegen. Dies führt zu einer deutlichen Effizienzsteigerung und Produktivitätsverbesserung.

Zudem kann diese Methode in neuen und bestehenden Kommissionieranlagen eingesetzt werden und die Leistungsfähigkeit sukzessive ausbauen und erweitern. Es ist auch eine Integration in Mischbetrieb mit manuellen oder teilautomatisierten Prozessen möglich.

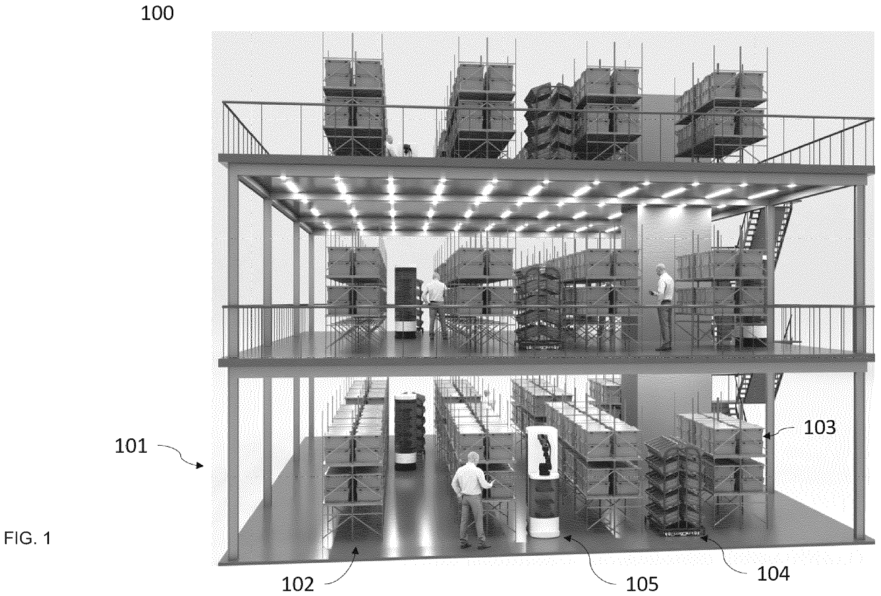

**Fig. 1** zeigt beispielhaft den Aufbau eines Kommissioniersystems 100. Das Kommissioniersystem 100, das für die Kommissionierung von Artikeln konzipiert ist, besteht aus folgenden Elementen:
Es weist ein Lager 101 auf, das eine Vielzahl von Regalen 102 beinhaltet. Diese Regale bieten in mehreren Ebenen angeordnete Lagerplätze 103, welche zur Lagerung und Bereitstellung von Artikeln dienen.

Das Lager ist vorzugsweise ein Fachbodenlager. In diesem Fachbodenlager können Artikel unterschiedlicher Größen und Formen gelagert werden. Das Lager kann sich auch über mehrere Ebenen bzw. Stockwerke erstrecken.

Zusätzlich zum Lager gibt es mindestens einen Kommissionierplatz (nicht dargestellt). Dieser Platz ist für die Auswahl von Artikeln aus dem Lager vorgesehen. Der Kommissionierplatz fungiert als Zentrum, an dem Artikel, die aus den Lagerplätzen entnommen wurden, für einzelne Aufträge zusammengebracht werden. An diesem Ort werden die aus verschiedenen Teilen des Lagers gewonnenen Artikel gemäß den spezifischen Anforderungen eines Auftrags zusammengestellt und bereitgestellt. Die so zusammengestellten Artikel werden dann zur weiteren Verarbeitung oder zum Versand an die Kunden weitergeleitet. Diese zentrale Sammelstelle ermöglicht eine geordnete und effiziente Zusammenstellung von Aufträgen. Aufgrund der modularen Struktur des Kommissioniersystems können mehrere Kommissionierplätze in einer Anlage vorhanden sein. Die Anzahl und Position der Kommissionierplätze hängt von der Größe des Lagers und der Art und Anzahl der zu kommissionierenden Artikel ab.

Zudem umfasst das Kommissioniersystem eine Lagerverwaltungseinheit (ebenfalls nicht dargestellt). Diese Einheit erstellt basierend auf den Kommissionieraufträgen eine definierte Kommissioniersequenz.

Die Lagerverwaltungseinheit ist ein computerbasiertes System, das auch als Warehouse Management System (WMS) bezeichnet wird. Es besteht aus Hardware- und Softwarekomponenten. Die Hardware kann verschiedene Geräte wie Computer, Server, Datenbanken und Netzwerkkomponenten umfassen. Die Software ist eine spezielle Anwendung, die auf die Bedürfnisse des Lager- und Kommissioniermanagements zugeschnitten ist. Die Lagerverwaltungseinheit kann cloudbasiert sein und mobile Anwendungen bieten, um die Zugänglichkeit und Flexibilität der Systeme zu verbessern. Sie kann maschinelles Lernen und Künstliche Intelligenz nutzen, um Prozesse weiter zu optimieren und zu automatisieren, indem sie Muster und Trends erkennt und Vorhersagen trifft. Diese Technologien können dazu beitragen, die Genauigkeit der Bestandsführung zu verbessern, die Nutzung des Lagers zu optimieren und die Produktivität zu steigern.

Die Lagerverwaltungseinheit erfasst, verarbeitet und verwaltet Informationen zu Lagerbeständen, eingehenden Kommissionieraufträgen und anderen relevanten Daten. Basierend auf den Kommissionieraufträgen generiert diese Einheit eine definierte Kommissioniersequenz. Die Kommissioniersequenz ist eine systematische Reihenfolge, in der Artikel aus dem Lager für eine Bestellung abgerufen werden sollen. Die Kommissioniersequenz beinhaltet eine Sequenz von Artikel-Entnahmepositionen innerhalb des Lagers. Ferner kann diese auch Details über die zu kommissionierenden Artikel selbst enthalten. Sie wird von der Lagerverwaltungseinheit erstellt, basierend auf einer Reihe von Faktoren wie der Bestellung selbst, der Anordnung der Artikel im Lager, der Priorität der Bestellung, der aktuellen Position und/oder der Verfügbarkeit der Avatarroboter und Sammelfahrzeuge im Lager etc. Dieser definierte Ablauf dient zur Optimierung der Kommissioniervorgänge, indem er beispielsweise Wegezeiten minimiert und eine effiziente Nutzung der Ressourcen gewährleistet.

Das Kommissioniersystem beinhaltet auch mindestens ein Sammelfahrzeug 104 und mindestens einen Avatarroboter 105. Beide Geräte können unabhängig voneinander innerhalb des Lagers 101 navigieren. Die Geräte navigieren selbständig durch das Lager zu den zugewiesenen Artikel-Entnahmepositionen. Sie können Hindernisse erkennen und entsprechend darauf reagieren, um Kollisionen zu vermeiden. Ihr Ziel sind die von der Lagerverwaltungseinheit bestimmten Artikel-Entnahmepositionen, um die Kommissionieraufträge zu erfüllen. Bei einem mehrstöckigen Lageraufbau können die Geräte mittels eines Aufzugssystems zwischen den verschiedenen Ebenen bewegt werden.

Die Artikel-Entnahmepositionen werden von der Lagerverwaltungseinheit in den generierten Kommissioniersequenzen definiert. Diese Positionen sind die genauen Standorte in den Regalen, an denen die zur Erfüllung des Auftrags zu kommissionierenden Artikel gelagert sind. Die Lagerverwaltungseinheit sendet die Informationen über Kommissioniersequenz und die Artikel-Entnahmepositionen als Kommissionieranweisungen an die Sammelfahrzeuge und die Avatarroboter. Die Sammelfahrzeuge und Avatarroboter navigieren dann autonom zum angegebenen Standort, entnehmen die Artikel und bringen sie zum Kommissionierplatz.

Der Avatarroboter 105 ist dazu konfiguriert, spezifische zu kommissionierende Artikel aus dem Lager zu entnehmen. Dieser ist mit Sensoren und ein oder mehreren Greifmittel ausgestattet, um einzelne Artikel sicher und präzise aus den Regalen zu entnehmen. Die Greifmittel des Avatarroboters 105 werden von einem Telemitarbeiter ferngesteuert. Dieser legt die Artikel auf die Lagerflächen eines zugewiesenen Sammelfahrzeugs 104. Das System kann mehrere Avatarroboter umfassen, deren Greifmittel von dem Telemitarbeiter intermittierend fernsteuerbar sind.

Das Sammelfahrzeug 104 ist dazu konfiguriert, eine Vielzahl von Artikel gleichzeitig zu transportieren. Nach Erhalt eines Kommissionierauftrags von der Lagerverwaltungseinheit navigiert das Sammelfahrzeug 104 zu den entsprechenden Artikel-Entnahmepositionen in den Regalen. Es nimmt die für den Auftrag bestimmten Artikel auf und bringt sie zum Kommissionierplatz.

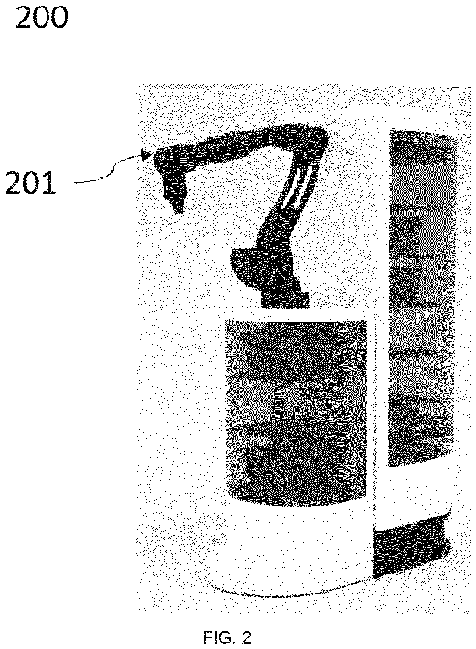

**Fig. 2** zeigt beispielhaft einen Avatarroboter 200 des Kommissioniersystems. Der Avatarroboter ist in der dargestellten Ausführungsform als Avatarfahrzeug 200 realisiert. In anderen Ausführungsformen kann der Avatarroboter aber auch in Form eines humanoiden Roboters realisiert sein. Der Avatarroboter ist in der Lage, selbständig innerhalb des Lagers zu navigieren, um die durch die Lagerverwaltungseinheit bestimmten Artikel-Entnahmepositionen zu erreichen und die Kommissionieraufträge zu erfüllen.

Er ist mit einem Greifmittel 201 ausgestattet, das dafür konzipiert ist, die zu kommissionierenden Artikel von den Lagerplätzen zu entnehmen und auf den Lagerflächen des zugeordneten Sammelfahrzeugs zu platzieren. Ein Greifmittel ist ein mechanisches oder elektromechanisches Gerät, das dazu dient, Objekte zu ergreifen, zu halten und zu bewegen. Es kann in unterschiedlichen Formen, wie z.B. als Greifarm ausgeführt sein und unterschiedliche Bewegungs- und Greifprinzipien bzw. Greifertypen verwenden. Während der Kommissionierprozesse ist dieses Greifmittel von einem Telemitarbeiter fernsteuerbar.

Der Avatarroboter bzw. das Avatarfahrzeug 200 kann aber auch mehrere Greifmittel aufweisen. Die Greifmittel des Avatarfahrzeugs können beispielsweise aus zwei Greifarmen bestehen, die in ihrer Anordnung dem menschlichen Körper nachempfunden sind. Dies ermöglicht eine genaue Nachbildung der zweihändigen Bedienung, die ein menschlicher Kommissionierer bei der Entnahme und Handhabung bestimmter Waren ausführen würde. Solche Aufgaben könnten das Vereinzeln von Artikeln oder das Verhindern des Herausfallens von Waren bei der Entnahme beinhalten. Ist der Avatarroboter als humanoider Roboter realisiert, weist dieser genau zwei Greifarme auf.

Jedes Greifmittel des Avatarfahrzeugs weist einen bestimmten Greifertypen auf, um eine Vielzahl von Artikeltypen zu handhaben, die in den unterschiedlichsten Formen und Größen auftreten können. Die Greifertypen beinhalten beispielsweise eines oder mehreres von:
Zwei-Finger-Greifer (Parallelgreifer): Sie bestehen aus zwei parallelen "Fingern", die sich öffnen und schließen, um einen Gegenstand zu greifen. Sie sind gut für rechteckige oder zylindrische Gegenstände geeignet.

Drei-Finger-Greifer: Diese Greifer haben drei "Finger", die sich öffnen und schließen, ähnlich wie eine menschliche Hand. Sie sind gut für das Greifen von runden oder unregelmäßig geformten Gegenständen geeignet.

Greifer mit Vakuumtechnik: Diese Greifer verwenden ein Vakuumsystem, um Gegenstände anzusaugen und zu halten. Sie eignen sich gut für flache, glatte Gegenstände, die schwierig zu greifen sind, wie Glasscheiben oder Bleche.

Magnetgreifer: Sie verwenden Magnete, um metallische Gegenstände zu greifen und zu halten.

Greifer mit adaptiven Fingern: Diese Greifer haben flexible "Finger", die sich an die Form und Größe des zu greifenden Gegenstandes anpassen können. Sie sind gut für eine Vielzahl von Gegenständen geeignet, insbesondere für solche mit unregelmäßigen Formen.

Weichrobotik-Greifer: Diese Greifer verwenden Materialien, die sich verformen und um das zu greifende Objekt herum "fließen" können. Sie sind ideal für empfindliche oder unregelmäßig geformte Gegenstände, da sie das Risiko von Beschädigungen minimieren.

Spezialisierte Greifer wie Gabeln oder Löffel für das Handling von sperrigen oder unregelmäßig geformten Gegenständen.

Diese Vielfalt an Greifoptionen ermöglicht es dem Avatarfahrzeug, eine Vielzahl von Artikeln mit unterschiedlichen Formen, Größen und Gewichten zu handhaben.

Der Telemitarbeiter kann beispielsweise über eine Benutzeroberfläche auf die verschiedenen Greifmittel zugreifen und den am besten geeigneten Greifertypen für den jeweiligen Artikel auswählen. Diese Auswahl kann basierend auf den Informationen über den zu kommissionierenden Artikel, die durch die Lagerverwaltungseinheit bereitgestellt werden, getroffen werden. Dieser Auswahlprozess entfällt, wenn das Fahrzeug lediglich ein Greifmittel aufweist.

Sobald das geeignete Greifmittel ausgewählt ist, kann der Telemitarbeiter das Greifmittel des Avatarfahrzeugs fernsteuern, den Artikel greifen und auf das zugeordnete Sammelfahrzeug platzieren. Ferngesteuerte Handhabungssysteme, wie speziell konfigurierte Handschuhe, ermöglichen dem Telemitarbeiter eine flexible und sichere Handhabung von Artikeln, insbesondere von solchen, die spezielle Handhabungsanforderungen haben oder die ein hohes Maß an Sorgfalt erfordern. Bei mehreren Greifmitteln, zum Beispiel zwei, könnte der Teleoperator zwei entsprechende Fernsteuerungseinheiten, wie zwei Handschuhe, verwenden.

In einigen Implementierungen kann das System auch automatisierte oder halbautomatisierte Greifverfahren umfassen. Diese Verfahren können zum Beispiel maschinelles Lernen oder andere künstliche Intelligenztechniken verwenden, um den am besten geeigneten Greifertypen zu bestimmen oder um den Greifprozess effizienter zu gestalten.

Vorzugsweise weisen die Greifmittel des Avatarfahrzeugs Drucksensoren auf, die den Telemitarbeiter mit Echtzeit-Rückmeldungen über den Greifdruck versorgen. Dadurch kann der Telemitarbeiter den Greifprozess präziser steuern, um sicherzustellen, dass die Artikel sicher und ohne Beschädigung gegriffen werden. Die Greifmittel des Avatarfahrzeugs können auch über eine automatische Greifkraftregelung verfügen, die auf den Daten der Drucksensoren basiert.

Um den Telemitarbeiter bei der ferngesteuerten Betätigung der Greifmittel zu unterstützen, können die Avatarfahrzeuge mit fernsteuerbaren Kamerasystemen ausgestattet sein. Diese Kameras ermöglichen dem Telemitarbeiter, den Standort und Zustand der zu kommissionierenden Artikel sowie die Umgebung im Lager genau zu beobachten.

Die Kamerasysteme, die im Avatarfahrzeug integriert sind, bieten eine visuelle Rückmeldung in Echtzeit an den Telemitarbeiter. Diese Systeme können eine oder mehrere Kameras umfassen, die verschiedene Perspektiven und Blickwinkel abdecken. So können beispielsweise Kameras, die auf die Greifmittel gerichtet sind, dem Telemitarbeiter einen detaillierten Blick auf den Artikel und den Greifprozess bieten.

Darüber hinaus können weitere Kameras, die auf die Umgebung gerichtet sind, dem Telemitarbeiter eine breite Übersicht über die aktuelle Lage im Lager bieten, einschließlich der Position des Avatarfahrzeugs in Bezug auf die Lagerregale und andere Fahrzeuge. Dies kann Telemitarbeiter dabei helfen, das Positionieren der Greifmittel effektiv zu steuern.

In bestimmten Ausführungsvarianten sind sowohl die Greifmittel als auch die Kameras an einem ausfahrbaren Mast montiert. Dies ermöglicht es den Kameras und Greifmittel, sich auf die benötigte Ebene des entsprechenden Faches zu positionieren.

Des Weiteren kann das Avatarfahrzeug mit zusätzlichen Sensoren ausgestattet sein, die dem Telemitarbeiter weitere Informationen liefern, wie zum Beispiel die Entfernung zu einem bestimmten Artikel oder das Gewicht des Artikels, wenn er angehoben wird. Diese zusätzlichen Informationen können dazu beitragen, Fehlentscheidungen zu vermeiden und die Sicherheit und Effizienz des Kommissioniervorgangs zu erhöhen.

Das Avatarfahrzeug ist über eine drahtlose Kommunikationsverbindung mit der Lagerverwaltungseinheit verbunden. Diese Verbindung ermöglicht es den Fahrzeugen, Kommissionieranweisungen zu erhalten und den aktuellen Zustand des Kommissionierungsvorgangs an die Lagerverwaltungseinheit zu übermitteln.

Die Lagerverwaltungseinheit verwendet die von den Fahrzeugen gesendeten Daten, um den Fortschritt der Kommissionierung zu überwachen, den Lagerbestand zu aktualisieren und eventuell erforderliche Änderungen in Echtzeit durchzuführen. Dies kann auch das Aktualisieren der Kommissioniersequenz und das erneute Zuweisen von Aufgaben bzw. Kommissionieranweisungen an die Fahrzeuge beinhalten, falls sich die Prioritäten ändern oder Probleme auftreten.

Vorzugsweise ist das Avatarfahrzeug mit Sensoren ausgestattet, um durch das Lager navigieren zu können. Diese können eines oder mehreres umfassen von: LiDAR-Sensoren (Light Detection And Ranging), Kameras, Ultraschallsensoren, Infrarotsensoren, Odometrie-Sensoren etc. Ferner kann das Avatarfahrzeug induktive Sensoren aufweisen. Diese Sensoren können metallische Objekte in ihrer Nähe erkennen und sind besonders nützlich, um die Position des Fahrzeugs relativ zu metallischen Regalen zu bestimmen. Die Sensoren können einzeln oder in Kombination verwendet werden, um ein detailliertes Bild der Umgebung zu erhalten und das Fahrzeug sicher und effizient durch das Lager zu navigieren.

In einigen Implementierungen des Kommissioniersystems können spezielle Markierungen oder Wegpunkte auf den Fahrwegen innerhalb des Lagers angebracht sein. Diese Markierungen können in Form von farbigen Linien, Barcodes, QR-Codes oder RFID-Tags vorliegen und dienen dazu, dem Avatarfahrzeug spezifische Routen oder Stationen innerhalb des Lagersystems zu signalisieren.

Das Avatarfahrzeug kann dann mit entsprechenden Sensoren oder Scannern ausgestattet sein, um diese Markierungen zu lesen und zu interpretieren. Solche Sensoren können beispielsweise optische Sensoren sein, die in der Lage sind, farbige Linien zu erkennen und zu verfolgen, oder Barcode-Scanner, die zum Lesen von Barcode- oder QR-Code-Markierungen verwendet werden können.

Das Navigieren mithilfe von Bodenmarkierungen ermöglicht es dem Avatarfahrzeug, sich präzise und effizient durch das Lager zu bewegen.

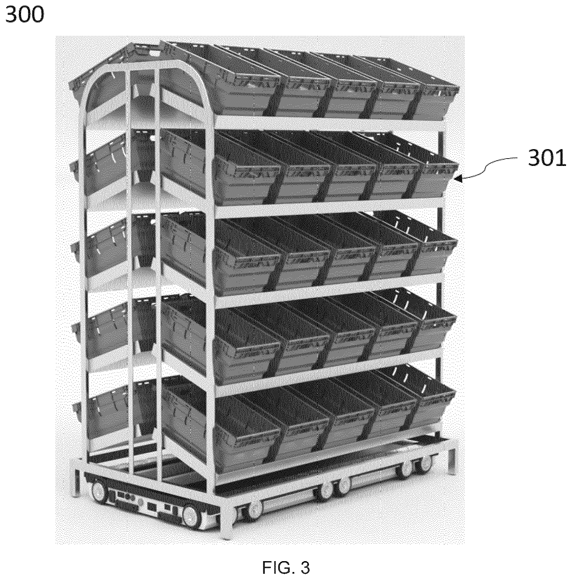

**Fig. 3** zeigt beispielhaft ein Sammelfahrzeug 300 des Kommissioniersystems. Es ist in der Lage, selbständig innerhalb des Lagers zu navigieren, um die durch die Lagerverwaltungseinheit in der Kommissioniersequenz bestimmten Artikel-Entnahmepositionen zu erreichen und die Kommissionieraufträge zu erfüllen. Es ist so konzipiert, dass es die vom Avatarroboter aus den Regalen entnommenen Artikel aufnimmt und an den Kommissionierplatz transportiert.

Das Sammelfahrzeug kann durch den Einsatz verschiedener Sensoren selbständig im Lager navigieren. Es kann die Sensoren aufweisen, die zuvor im Bezug auf den Avatarroboter beschrieben wurden. Es folgt dabei den Routen, die von der Lagerverwaltungseinheit basierend auf der generierten Kommissioniersequenz vorgegeben werden.

Das Sammelfahrzeug ist mit mehreren Lagerflächen 301 ausgestattet, auf denen die zu kommissionierenden Artikel abgelegt werden können. Diese Lagerflächen sind so gestaltet, dass sie eine Vielzahl von Artikeln unterschiedlicher Größen und Formen aufnehmen können. In einigen Ausführungsbeispielen können die Lagerflächen modular und/oder anpassbar sein, um eine optimale Nutzung des verfügbaren Raums zu gewährleisten.

Die Lagerflächen auf dem Sammelfahrzeug können vielfältig sein und unterschiedliche Formen, Größen und Funktionalitäten aufweisen, abhängig von den spezifischen Anforderungen des Kommissioniersystems. Die Lagerflächen können beispielsweise eines oder mehreres umfassen von: Regalen und Fächern, Ablagefächern oder -boxen, Aufhängevorrichtungen, Palettenplätzen, Auszugsschubladen, Behältern oder Bins, teleskopische oder ausziehbare Regalen. Die Gestaltung und Auswahl der Lagerflächen hängt in hohem Maße von der Art der zu lagernden Artikel ab. Die Sammelfahrzeuge können unterschiedliche Lagerflächen aufweisen.

Das Sammelfahrzeug ist in der Lage, gleichzeitig mehrere Kommissionieraufträge abzuwickeln. Es kann auf seiner Route an verschiedenen Artikel-Entnahmepositionen im Lager anhalten, um die Artikel aufzunehmen, die für die Erfüllung mehrerer Aufträge erforderlich sind. Nach dem Sammeln der zu kommissionierenden Artikel fährt das Sammelfahrzeug zurück zum Kommissionierplatz, wo die Artikel für den weiteren Versand oder die Auslieferung vorbereitet werden.

Diese Strategie kann dazu beitragen, unnötige Fahrten durch das Lager zu reduzieren und die Produktivität des Lagers insgesamt zu verbessern.

Darüber hinaus ist das Sammelfahrzeug mit der Lagerverwaltungseinheit über eine drahtlose Kommunikationsverbindung verbunden. Diese Verbindung ermöglicht es dem Sammelfahrzeug, Kommissionieranweisungen zu erhalten und den aktuellen Zustand des Kommissionierungsvorgangs an die Lagerverwaltungseinheit zu übermitteln. Auf diese Weise kann die Lagerverwaltungseinheit den Kommissionierungsprozess kontinuierlich überwachen und bei Bedarf Anpassungen vornehmen.

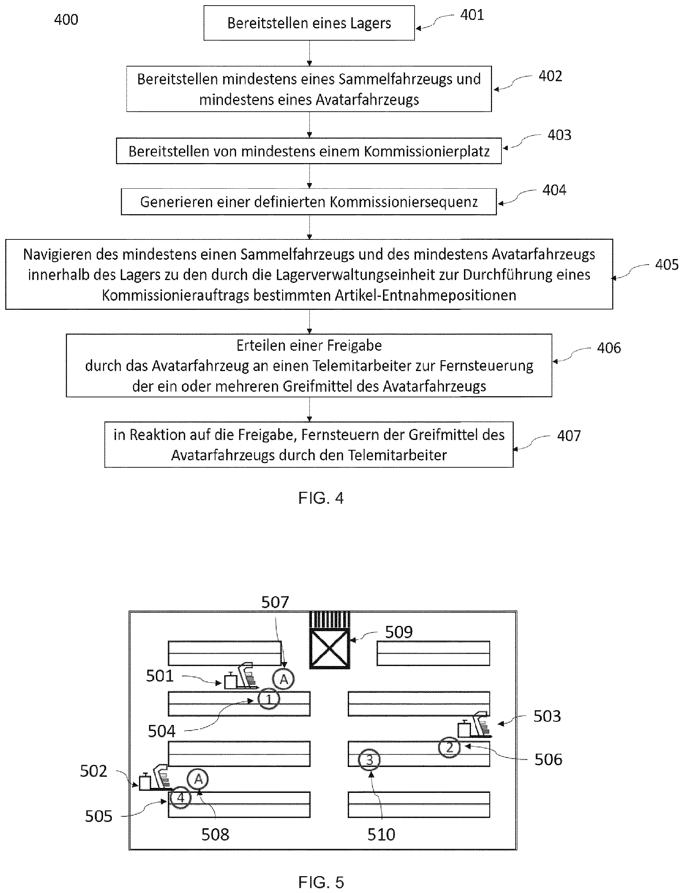

**Fig. 4** zeigt ein Verfahren zum Kommissionieren von Artikeln in einem erfindungsgemäßen Kommissioniersystem. Das Verfahren umfasst die folgenden Schritte:
Das Verfahren beginnt mit der Bereitstellung 401 eines Lagers. Dieses Lager enthält eine Vielzahl von Regalen und in mehreren Ebenen der Regale angeordnete Lagerplätze zur Lagerung und Bereitstellung von Artikeln. Dabei ist es so konzipiert, dass es eine effiziente Lagerung und Zugänglichkeit der Artikel ermöglicht, um die Effizienz des gesamten Kommissionierprozesses zu erhöhen. Vorzugsweise ist das Lager ein Fachbodenlager.

Das Bereitstellen 402 mindestens eines Sammelfahrzeugs mit Lagerflächen zur Aufnahme von zu kommissionierenden Artikeln und mindestens eines Avatarroboters, das ein oder mehrere Greifmittel zum Ergreifen von zu kommissionierenden Artikeln und zum Ablegen der zu kommissionierenden Artikel auf den Lagerflächen des Sammelfahrzeugs aufweist.

Das Bereitstellen 403 von mindestens einem Kommissionierplatz zum Kommissionieren von aus dem Lager entnommenen Artikeln. Diese Plätze dienen dazu, die aus dem Lager entnommenen Artikel zu sammeln, zu sortieren und für den weiteren Transport vorzubereiten.

Das Generieren 404 einer definierten Kommissioniersequenz durch eine Lagerverwaltungseinheit basierend auf empfangenen Kommissionieraufträgen. Diese Sequenz bestimmt die Reihenfolge, in der die Artikel kommissioniert werden. Es umfasst eine Sequenz von Artikel-Entnahmepositionen, die von den Sammelfahrzeugen und Avatarrobotern angesteuert werden muss. Die definierte Kommissioniersequenz kann darüber hinaus spezifische Informationen über die zu kommissionierenden Artikel selbst beinhalten. Dies kann Details wie den Artikeltyp, die Artikelnummer, das Gewicht und die Abmessungen des Artikels sowie andere spezifische Merkmale umfassen.

Das Navigieren 405 des mindestens einen Sammelfahrzeugs und des mindestens einen Avatarroboters innerhalb des Lagers zu den in der Kommissioniersequenz zur Durchführung eines Kommissionierauftrags bestimmten Artikel-Entnahmepositionen. Beispielsweise erhalten die Sammelfahrzeuge und Avatarroboter spezifische Kommissionieranweisungen, die die Kommissioniersequenz beinhalten oder basierend darauf generiert werden.

Das Erteilen 406 einer Freigabe durch den Avatarroboter an einen Telemitarbeiter zur Fernsteuerung der Greifmittel des Avatarroboters.

In Reaktion auf die Freigabe das Fernsteuern 407 der ein oder mehreren Greifmittel des Avatarroboters durch den Telemitarbeiter, wobei das Fernsteuern das Ergreifen der zu kommissionierenden Artikel von den Lagerplätzen durch die ein oder mehreren Greifmittel und das Ablegen der ergriffenen Artikel auf den Lagerflächen des jeweils zugeordneten Sammelfahrzeugs umfasst.

In einer Ausführungsform umfasst das Erzeugen der Kommissioniersequenz und Kommissionieranweisungen die folgenden Schritte:
Das Empfangen von Kommissionieraufträgen. Die Lagerverwaltungseinheit erhält eine Liste von Kommissionieraufträge. Jeder Auftrag gibt spezifische Artikel an, die aus dem Lager entnommen und kommissioniert werden sollen.

Das Identifizieren von Artikel-Entnahmepositionen. Die Lagerverwaltungseinheit identifiziert die genauen Positionen im Lager, an denen sich die zu kommissionierenden Artikel befinden. Diese Positionen können als Koordinaten innerhalb des Lagers definiert sein.

Das Auswählen mindestens eines Avatarroboters und mindestens eines Sammelfahrzeugs und das Berechnen der effizientesten Route der ausgewählten Sammelfahrzeuge und Avatarroboter zu den identifizierten Artikel-Entnahmepositionen. Basierend auf den Artikel-Entnahmepositionen und den aktuell verfügbaren Geräten im System, wählt die Lagerverwaltungseinheit ein oder mehrere Avatarroboter und Sammelfahrzeuge aus. Diese Auswahl kann auf verschiedenen Faktoren basieren, einschließlich der aktuellen Position der Sammelfahrzeuge und Avatarroboter, ihrer Verfügbarkeit und ihrer Fähigkeit und Ausstattung, die angeforderten Artikel zu handhaben. Die Lagerverwaltungseinheit kann Algorithmen verwenden, um die effizienteste Route für das Sammelfahrzeug und den Avatarroboter zu berechnen. Diese Route zielt darauf ab, die Wegzeiten zu minimieren und die Produktivität zu maximieren.

Das Generieren der Kommissioniersequenz. Basierend auf den Artikel-Entnahmepositionen und der Routeninformation bzw. den effizientesten Routen generiert die Lagerverwaltungseinheit eine definierte Kommissioniersequenz für die ausgewählten Sammelfahrzeuge und Avatarroboter. Diese Sequenz legt die Reihenfolge fest, in der die Artikel von den ausgewählten Sammelfahrzeugen und Avatarrobotern kommissioniert werden sollen.

Das Generieren und Übermitteln von Kommissionieranweisungen an die ausgewählten Sammelfahrzeuge und Avatarroboter. Die Lagerverwaltungseinheit erzeugt nun Anweisungen basierend auf der definierten Kommissioniersequenz. Diese Instruktionen enthalten spezifische Anleitungen für die Sammelfahrzeuge und Avatarroboter, die die Kommissionieraufträge ausführen. Die Anweisungen umfassen die Artikel-Entnahmepositionen und eine Reihenfolge in der die Artikel-Entnahmepositionen angesteuert werden müssen. Optional umfassen die Anweisungen Informationen der spezifischen Artikel, die sie an jeder Entnahmeposition sammeln müssen. Diese Anweisungen werden dann an die ausgewählten Sammelfahrzeuge und Avatarroboter übermittelt. Bei Erhalt dieser Anweisungen beginnen die Sammelfahrzeuge und Avatarroboter selbständig zu navigieren, um die festgelegten Artikel-Entnahmepositionen in der vorgegebenen Reihenfolge zu erreichen und die Kommissionieraufträge in der vorgegebenen Reihenfolge zu erfüllen.

In einer Ausführungsform umfasst das Erteilen der Freigabe durch den Avatarroboter an den Telemitarbeiter zur Fernsteuerung der Greifmittel des Avatarroboters folgende Schritte:
Das Navigieren zur Artikel-Entnahmeposition. Der Avatarroboter navigiert zu der in der Kommissionieranweisung bzw. Kommissioniersequenz bestimmten Artikel-Entnahmeposition.

Das Senden einer Bereitschaftsmeldung. Nachdem der Avatarroboter die vorgesehene Position erreicht hat, sendet es eine Bereitschaftsmeldung oder eine Freigabeaufforderung an den Telemitarbeiter. Diese Meldung informiert den Telemitarbeiter, dass der Avatarroboter bereit ist, den ferngesteuerten Greifprozess zu starten.

Das Aktivieren der Fernsteuerung. Der Telemitarbeiter, der die Meldung oder Freigabeaufforderung erhält, kann daraufhin die Fernsteuerung der Greifmittel aktivieren. Ab diesem Zeitpunkt hat der Telemitarbeiter die Kontrolle über die Greifmittel des Avatarroboters und kann den Kommissioniervorgang beginnen. Der Telemitarbeiter überwacht und steuert den Greifprozess in Echtzeit, vorzugsweise mit Hilfe von Kamerabildern oder Sensordaten, die von dem Avatarroboter bereitgestellt werden.

In einer Ausführungsform umfasst das Fernsteuern der ein oder mehreren Greifmittel des Avatarroboters durch den Telemitarbeiter folgende Schritte:
Auswählen der Greifmittel. Als Reaktion auf die Freigabe erfolgt die Auswahl der passenden Greifmittel basierend auf den bereitgestellten Informationen zu den zu kommissionierenden Artikel. Die Auswahl erfolgt beispielsweise anhand einer Bedienoberfläche.

Aktivieren der Fernsteuerung. Daraufhin wird die Fernsteuerung für die ausgewählten Greifmittel aktiviert.

Ergreifen der zu kommissionierenden Artikel und Ablegen der ergriffenen Artikel auf den vorgesehenen Lagerflächen: Anschließend nutzt der Telemitarbeiter die ein oder mehreren ausgewählten Greifmittel, um die zu kommissionierenden Artikel von ihren Lagerplätzen zu ergreifen. Beispielsweise kann im Falle von zwei ausgewählten Greifmitteln der Telemitarbeiter zur Fernsteuerung beide Arme einsetzen. Nach dem Ergreifen der Artikel erfolgt das Ablegen der ergriffenen Artikel auf den vorgesehenen Lagerflächen des jeweils zugeordneten Sammelfahrzeugs.

**Fig. 5** zeigt schematisch einen typischen Kommissionierweg 500, der von den Avatarrobotern - und Sammelfahrzeugen in einem erfindungsgemäßen Kommissioniersystem genutzt wird. Sammelfahrzeuge und Avatarroboter sind in der Lage, sich unabhängig voneinander und vollautomatisch zu ihrem jeweils nächsten Ziel zu bewegen.

Ein Kommissioniervorgang läuft beispielsweise wie folgt ab:
Die Sammelfahrzeuge 501, 502, 503 fahren selbständig zu einer ihnen zugeordneten Artikel-Entnahmeposition 504, 505, 506 und verharren dort.

Die Avatarroboter 507, 508 bewegen sich ebenfalls zu Artikel-Entnahmepositionen 504, 505, an denen sich bereits jeweils ein Sammelfahrzeug befindet.

Ein Telemitarbeiter schaltet sich auf den ersten bereitstehenden Avatarroboter 507 auf und führt den Kommissioniervorgang durch. Der Telemitarbeiter greift den Artikel mit den ein oder mehreren Greifmitteln des Avatarroboters aus dem Regal und legt es dann, durch optische oder akustische Anweisungen geführt, auf einer Lagerfläche des zugeordneten Sammelfahrzeugs 501 ab.

Nachdem der Artikel abgelegt wurde, wird der Telemitarbeiter auf den nächsten bereitstehenden Avatarroboter 508 aufgeschaltet. In der Zwischenzeit navigiert der erste Avatarroboter 507 zu dem weiteren bereitstehenden Sammelfahrzeug 503. Das Sammelfahrzeug 501 fährt zum Kommissionierplatz 509 oder zu einer weiteren Artikel-Entnahmeposition 510.

## Patentansprüche

1. Kommissioniersystem zum Kommissionieren von Artikeln, wobei das System Folgendes umfasst:
ein Lager, das eine Vielzahl von Regalen mit in mehreren Ebenen angeordneten Lagerplätzen zur Lagerung und Bereitstellung von Artikeln aufweist;
mindestens einen Kommissionierplatz zum Kommissionieren von aus dem Lager entnommenen Artikeln;
eine Lagerverwaltungseinheit, die basierend auf Kommissionieraufträgen eine definierte Kommissioniersequenz generiert;
mindestens ein Sammelfahrzeug und mindestens ein Avatarroboter, die zur Erfüllung der Kommissionieraufträge unabhängig voneinander innerhalb des Lagers zu den in der Kommissioniersequenz zur Durchführung eines Kommissionierauftrags bestimmten Artikel-Entnahmepositionen navigierbar sind,
wobei das Sammelfahrzeug Lagerflächen zur Aufnahme von zu kommissionierenden Artikeln aufweist, und
wobei der Avatarroboter ein oder mehrere Greifmittel zum Ergreifen von den zu kommissionierenden Artikeln von den Lagerplätzen und zum Ablegen der zu kommissionierenden Artikel auf den Lagerflächen des jeweils zugeordneten Sammelfahrzeugs aufweist, wobei die ein oder mehreren Greifmittel durch einen Telemitarbeiter fernsteuerbar sind.

2. Kommissioniersystem nach Anspruch 1, aufweisend mehrere Avatarroboter, deren Greifmittel von dem Telemitarbeiter intermittierend fernsteuerbar sind.

3. Kommissioniersystem nach einem der vorhergehenden Ansprüche, wobei die Avatarroboter fernsteuerbare Kamerasysteme zur Unterstützung der ferngesteuerten Betätigung der ein oder mehreren Greifmittel aufweisen.

4. Kommissioniersystem nach einem der vorhergehenden Ansprüche, wobei der Kommissionierplatz konfiguriert ist, die von den Sammelfahrzeugen zugeförderten Artikel nach den Kommissionieraufträgen zu sortieren und für den Weitertransport bereitzustellen.

5. Kommissioniersystem nach einem der vorhergehenden Ansprüche, wobei das mindestens eine Sammelfahrzeug und der mindestens eine Avatarroboter über eine drahtlose Kommunikationsverbindung mit der Lagerverwaltungseinheit verbunden sind, um Kommissionieranweisungen basierend auf der Kommissioniersequenz zu erhalten und um einen aktuellen Zustand des Kommissionierungsvorgangs an die Lagerverwaltungseinheit zu übermitteln.

6. Kommissioniersystem nach einem der vorhergehenden Ansprüche, wobei das Lager ein Fachbodenlager ist.

7. Kommissioniersystem nach einem der vorhergehenden Ansprüche, wobei das mindestens eine Sammelfahrzeug und der mindestens eine Avatarroboter Sensoren aufweisen und/oder mithilfe von Markierungen auf der Fahrbahn innerhalb des Lagers navigieren.

8. Kommissioniersystem nach einem der vorhergehenden Ansprüche, wobei die ein oder mehreren Greifmittel des mindestens einen Avatarroboters Drucksensoren aufweisen.

9. Kommissioniersystem nach Anspruch 8, wobei der mindestens eine Avatarrobotereine Echtzeit-Rückmeldung über den Greifdruck an den Telemitarbeiter ermöglicht.

10. Kommissioniersystem nach einem der Ansprüche 8 oder 9, wobei die ein oder mehreren Greifmittel des mindestens einen Avatarroboters eine automatische Greifkraftregelung aufweisen, die auf den Daten der Drucksensoren basiert.

11. Kommissioniersystem nach einem der vorhergehenden Ansprüche, wobei jedes Greifmittel des mindestens einen Avatarroboters ein Greifarm ist und einen bestimmten Greifertyp aufweist.

12. Kommissioniersystem nach einem der vorhergehenden Ansprüche, wobei der Avatarroboter ein Fahrzeug ist.

13. Verfahren zum Kommissionieren von Artikeln in einem Kommissioniersystem, wobei das Verfahren Folgendes umfasst:
Bereitstellen eines Lagers mit einer Vielzahl von Regalen und in mehreren Ebenen angeordneten Lagerplätzen zur Lagerung und Bereitstellung von Artikeln, sowie mindestens eines Sammelfahrzeugs mit Lagerflächen zur Aufnahme von Artikeln und mindestens eines Avatarroboters mit ein oder mehreren Greifmitteln zum Ergreifen von zu kommissionierenden Artikeln und zum Ablegen der ergriffenen Artikel auf den Lagerflächen des Sammelfahrzeugs;
Bereitstellen von mindestens einem Kommissionierplatz zum Kommissionieren von aus dem Lager entnommenen Artikeln;
Generieren einer definierten Kommissioniersequenz durch eine Lagerverwaltungseinheit basierend auf empfangenen Kommissionieraufträgen;
Navigieren des mindestens einen Sammelfahrzeugs und des mindestens einen Avatarroboters innerhalb des Lagers zu den in der Kommissioniersequenz zur Durchführung eines Kommissionierauftrags bestimmten Artikel-Entnahmepositionen;
Erteilen einer Freigabe durch den Avatarroboteran einen Telemitarbeiter zur Fernsteuerung der ein oder mehreren Greifmittel des Avatarroboters; und
in Reaktion auf die Freigabe, Fernsteuern der ein oder mehreren Greifmittel des Avatarroboters durch den Telemitarbeiter, wobei das Fernsteuern umfasst:
Ergreifen von zu kommissionierenden Artikeln von den Lagerplätzen durch die ein oder mehreren Greifmittel des Avatarroboters; und
Ablegen der ergriffenen Artikel auf den Lagerflächen des jeweils zugeordneten Sammelfahrzeugs.
